(19) **Europäisches Patentamt**
**European Patent Office**
**Office européen des brevets**

(11) **EP 1 732 658 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **05732059.0**

(22) Anmeldetag: **02.03.2005**

(51) Int Cl.:
***B01B 1/00*** *(2006.01)*

(86) Internationale Anmeldenummer:
**PCT/EP2005/002194**

(87) Internationale Veröffentlichungsnummer:
**WO 2005/084771 (15.09.2005 Gazette 2005/37)**

(54) **KOMPAKTDAMPFREFORMER**

COMPACT STEAM REFORMER

REFORMEUR A VAPEUR COMPACT

(84) Benannte Vertragsstaaten:
**DE FR GB IT**

(30) Priorität: **06.03.2004 DE 102004010910**

(43) Veröffentlichungstag der Anmeldung:
**20.12.2006 Patentblatt 2006/51**

(60) Teilanmeldung:
**09156079.7 / 2 070 591**

(73) Patentinhaber: **WS Reformer GmbH**
**71272 Renningen (DE)**

(72) Erfinder: **WÜNNING, Joachim A.**
**71229 Leonberg (DE)**

(74) Vertreter: **Rüger, Barthelt & Abel**
**Patentanwälte**
**Webergasse 3**
**73728 Esslingen (DE)**

(56) Entgegenhaltungen:
**EP-A- 0 922 666       WO-A- 98/08771**
**WO-A- 02/085781    US-A1- 2002 083 829**
**US-B1- 6 641 625**

**Beschreibung**

Die Erfindung betrifft einen Kompaktdampfreformer und ein Verfahren zur Dampfreformierung.

Bei der Dampfreformierung von Kohlenwasserstoffen zur Erzeugung von Wasserstoff werden im Gegensatz zur autothermen Reformierung der Stoffstrom zur Gaserzeugung und der Stoffstrom zur Beheizung getrennt gehalten. Damit wird bei der Dampfreformierung die Verdünnung des Wasserstoffs mit dem Stickstoff der Verbrennungsluft vermieden.

Aus der DE 101 19 083 A1 ist ein Kompaktdampfreformer bekannt, bei dem das Prozesswasser im Wesentlichen durch das abzukühlende Reformat verdampft wird. Die Abgaswärme der Verbrennung wird durch Luftvorwärmung zurückgewonnen. NOx-Bildung wird durch Anwendung der flammenlosen Oxidation vermieden. Dieser Reformer erlaubt eine schnelle Leistungsregelung und weist einen Wirkungsgrad von bis zu etwa 80% auf.

Aus der WO 02/085781 ist ein ähnlicher Reformer bekannt, der hinsichtlich seiner Außenisolierung optimiert ist.

Diese Reformer erfüllen die in sie gesetzten Erwartungen. Es besteht jedoch der Wunsch nach weiteren Verbesserungen in Bezug auf die Vereinfachung der Prozessregelung und die Effizienz der Wärmerückgewinnung. Des Weiteren muss das Reformat möglichst weitgehend von CO-Beimengungen befreit werden. Dies muss so vollständig geschehen, dass nachgeschaltete CO-empfindliche Brennstoffzellen keinen Schaden nehmen.

Aus der EP 1 031 374 A2 ist es bekannt, das CO-haltige Prozessgas in einen so genannten CO-Oxidator zu geben, der zugleich als Reformatkühler dient. Die Kühlung wird durch Verdampfung des einströmenden Prozessgases in einem Verdampfer bewirkt.

Davon ausgehend ist es Aufgabe der Erfindung, den eingangs genannten Kompaktdampfreformer in Bezug auf die Kontrolle der Prozessführung und die Effizienz der Wärmerückgewinnung zu verbessern.

Diese Aufgabe wird mit dem Kompaktdampfreformer nach Anspruch 1:

Der erfindungsgemäße Kompaktdampfreformer weist einen Reaktor auf, der von einem Brenner beheizt ist. Dem Brenner ist eine Vorwärmeinrichtung mit hoher Wärmerückgewinnung zugeordnet. Dies steigert die Effizienz des Reformierungsprozesses. Außerdem weist der Reformer einen Nach-Reaktor auf, der zur Durchführung einer Shift-Reaktion, einer Nachoxidation und/oder einer Methanisierung der im Rohreformat enthaltenen Kohlenmonoxidanteile eingerichtet ist. Der Nach-Reaktor steht mit einem Rohrverdampfer in wärmeaustauschender Verbindung, der die Temperatur des Nach-Reaktors kontrolliert auf einem festgelegten Niveau hält. Dadurch wird die gewünschte Selektivität der Nachreaktion auch bei Lastwechsel erhalten. Der Rohrverdampfer bewirkt eine Vergleichmäßigung der Temperatur in dem Nachreaktor sowohl zeitlich als auch räumlich. Der Stoffstrom in dem Rohrverdampfer bewirkt einen Wärmetransport in dem Nachreaktor, so dass sich dieser schnell an Lastwechsel anpassen kann. Dies gilt insbesondere, wenn der Rohrverdampfer und der Nachreaktor im Gleichstrom arbeiten.

Durch die Festlegung der Verdampfertemperatur wird zugleich die Temperatur des Nach-Reaktors in so engen Grenzen festgelegt, dass der CO-Gehalt auf Werte von weniger als 50 ppm abgesenkt werden kann. Eine katalytische Nachbehandlung, Filterung oder sonstige Nachbehandlung des Prozessgases wird dadurch überflüssig. Das von dem Kompaktdampfreformer erzeugte Gas kann Wasserstoffbrennstoffzellen unmittelbar zugeführt werden.

Die Temperatur des Nach-Reaktors kann auf einfachste Weise durch Regelung des Dampfdrucks erfolgen. Mit dem Dampfdruck ist zugleich die Dampferzeugertemperatur für alle Betriebszustände festgelegt. Die enge thermische Kopplung zwischen dem Nach-Reaktor und dem druckgeregelten Verdampfer z.B. durch Ausbildung des Rohrverdampfers als Rohrschlange und der Anordnung etwaiger Katalysatoren in den Rohrzwischenräumen schafft somit gute Bedingungen für die Erzeugung CO-armen Wasserstoffs.

Der Kompaktdampfreformer kann eine an den Rohrverdampfers oder einen sonstigen Verdampfer angeschlossene Strahlpumpe aufweisen, die ein Brennstoffdampfgemisch vorgegebener Zusammensetzung erzeugt und den Reaktor speist. Dies schafft die Grundlage für eine besonders einfache regelungstechnische Beherrschung des Kompaktdampfreformers. Die erzeugte Dampfmenge wird beispielsweise durch entsprechende Zumessung einer Speisewassermenge gesteuert. Die dem Reformer zur Reformierung zugeführte Brennstoffmenge muss nicht gesondert geregelt werden sondern wird von der Strahlpumpe zudosiert.

Weitere Einzelheiten vorteilhafter Ausführungsformen der Erfindung ergeben sich aus der Zeichnung, der Beschreibung oder Ansprüchen.

In der Zeichnung sind Ausführungsbeispiele der Erfindung veranschaulicht. Es zeigen:

Figur 1     einen Kompaktdampfreformer mit angeschlossener Brennstoffzelle in schematischer Darstellung,

Figur 2     das Temperaturprofil der Prozessgase als Diagramm,

Figur 3     das Temperaturprofil der Heizgase als Diagramm und

Figur 4     den Kompaktdampfreformer in schematischem Längsschnitt mit Zuordnung seiner Arbeitszonen zu den Diagrammen nach Figur 2 und 3.

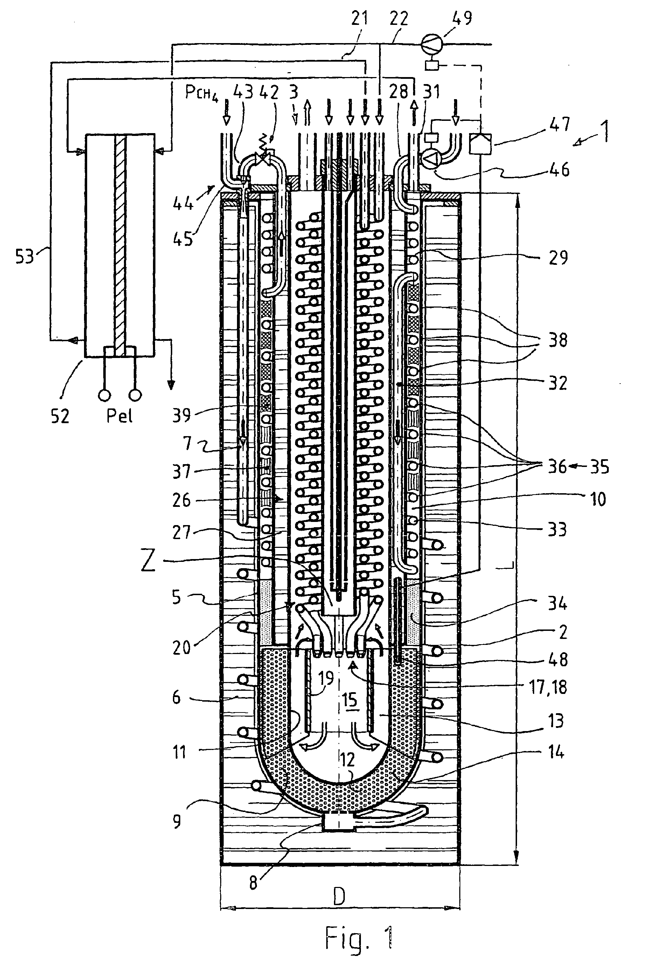

In Figur 1 ist ein Dampfreformer 1 in längs geschnittener, schematisierter Darstellung veranschaulicht. Er weist einen äußeren Mantel 2 der Länge L mit Kreisquerschnitt des Durchmessers D auf. Er kann zylindrisch oder auch in mehreren Zylindern abgestuft sein. Sämtliche Anschlüsse 3 sind vorzugsweise durch seinen oberen Abschluss 4 geführt.

Innerhalb des Mantels 2 ist konzentrisch und mit Abstand zu diesem ein unten abgeschlossenes Reformerrohr 5 angeordnet. Der zwischen dem Mantel 2 und dem Reformerrohr 5 vorhandene ringförmige Zwischenraum ist mit einem Isoliermaterial 6 zur thermischen Isolierung gefüllt. Eine Zuführleitung 7 für ein Gemisch aus Brennstoff und Dampf führt von dem oberen Abschluss 4 zunächst gerade und weiter unten in Windungen durch das Isoliermaterial 6 zu einem Speiseanschluss 8 an dem unteren Ende des Reformerrohrs. Dessen unterer becherförmiger Abschluss bildet den äußeren Mantel eines Reaktors 9 zur Durchführung des eigentlichen Reformierungsprozesses. Der Reaktor 9 ist nach innen hin durch ein inneres Reformerrohr 11 begrenzt, das unten becherförmig abgeschlossen und oben an dem Abschluss 4 gehalten ist. In dem becherförmigen Ringraum zwischen dem unteren Ende des inneren Reformerrohrs 11 und dem unteren Ende des äußeren Reformerrohrs 5 ist ein Katalysator 12 für den Reformingprozess angeordnet. Das Reformerrohr 11 ist vorzugsweise sowohl innen als auch außen jeweils mit Rippen 13, 14 versehen, die der Wärmeübertragung zwischen dem Katalysator 12 und einer von dem Reformerrohr 11 umschlossenen Brennkammer 15 dienen. Dieser ist ein Brenner 16 zugeordnet, der der Beheizung des Katalysators 12 dient und dazu eingerichtet ist, in der Brennkammer 15 eine flammenlose Oxidation des eingeleiteten Brennstoffs zu bewirken. Dazu sind eine Reihe von Gas- und Luftdüsen 17, 18 vorgesehen, die gleichsinnig ausgerichtet auf einem Kranz angeordnet sind und eine großräumige Zirkulation erzeugen. Ein zu dem Düsenkranz konzentrisch angeordneter hohlzylindrischer Leitkörper 19 kann die in Figur 1 durch Pfeile angedeutete großräumige Zirkulationsströmung unterstützen.

Sowohl die Gasdüsen 17 als auch die Luftdüsen 18 werden über eine Vorwärmeinrichtung 20 gespeist, die Abgaswärme nutzt. Zu dieser gehören Leitungen 21, 22, die als Schlangen durch einen innerhalb des oberen Teils des Reformerrohrs 11 ausgebildeten Abgaskanal 23 geführt sind. Somit werden sowohl das der Brennkammer 15 zugeführte Brenngas als auch die zugeführte Luft vorgewärmt. Es wird ein hoher Rekuperationsgrad und somit ein kühles Abgas erreicht. Vorzugsweise ist $(1-\Delta T_2/\Delta T_1) > 0{,}8$, wobei $\Delta T_1$ - die Abgastemperaturdifferenz zwischen Ein- und Ausgang des Abgaskanals 23 der Vorwärmeinrichtung 20 und $\Delta T_2$ die Differenz zwischen Abgastemperatur an dem Ausgang und Frischlufttemperatur an dem Ausgang ist. $(1-\Delta T_2/\Delta T_1)$ ist zumindest größer als 0,5.

Zentral kann ein Zündbrenner Z oder eine Elektroheizung vorgesehen sein, der der Vorwärmung der Brennkammer 15 bis zum Einsetzen der flammenlosen Oxidation dient.

Der insoweit beschriebene Dampfreformer 1 beinhaltet einen Dampferzeuger 24, der in dem Ringraum 10 zwischen dem äußeren Rekuperatorrohr 5 und dem inneren Rekuperatorrohr 11 angeordnet und mit diesem wärmetechnisch gekoppelt ist. Der Dampferzeuger 24 wird vorzugsweise durch eine Rohrschlange gebildet, die in mehrere Abschnitte unterteilt ist und konzentrisch zu der Vorwärmeinrichtung angeordnet ist. Dazwischen ist ein Rohr 25 angeordnet, das mit dem inneren Reformerrohr 11 einen weiteren Ringraum 26 umschließt. Dieser ist mit Isoliermaterial 27 zur thermischen Isolation des Abgaskanals 23 von dem Reformatkanal gefüllt, der zwischen dem äußeren Reformerrohr 5 und dem Rohr 25 durch den Ringraum 10 ausgebildet ist.

Der Dampferzeuger 24 weist einen Speisewasseranschluss 28 auf, von dem ausgehend ein erster Rohrschlangenabschnitt 29 durch den Reformatkanal führt, der an einem Reformatausgang 31 mündet. Der Rohrschlangenabschnitt 29 bildet einen im Gegenstrom arbeitenden Wasser/Reformat-Gegenstromkühler.

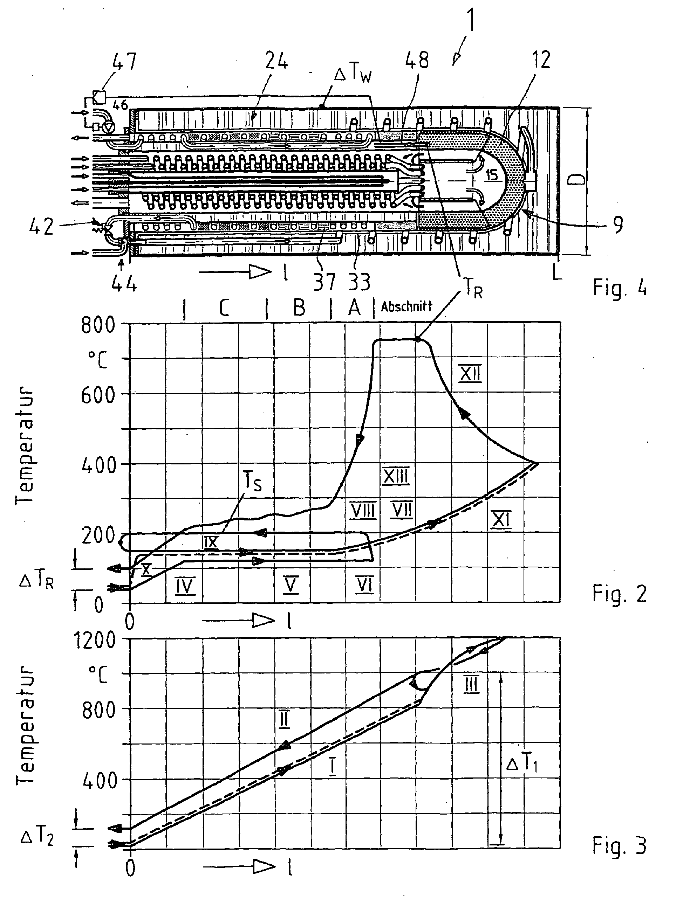

Die Rohrschlange 29 führt dann zu einem Überbrückungsrohr 32, das in Axialrichtung durch den Zwischenraum 26 führt. Es wechselt dann wieder in den äußeren Ringraum 10, der den Reformatkanal bildet und setzt sich dort als Rohrschlangenabschnitt 33 fort. Dieser bildet einen Wasser-Erhitzer und zugleich einen Reformat-Schockkühler (Quench Cooler, Abschnitt A in Figur 3 und 5). Zwischen dem Rohrschlangenabschnitt 33 und dem Katalysator 12 ist ein gasdurchlässiger ringförmiger Isolierkörper 34 angeordnet, der eine Überhitzung des Dampferzeugers 24 bei Nulllast, d.h. bei Speisewasserdurchströmung von Null oder nahe Null unterbindet.

An den Rohrschlangenabschnitt 33 schließt sich ein weiterer Rohrschlangenabschnitt 35 an, der aus mehreren Windungen 36, 38 besteht (Abschnitt B in Figur 3 und 5). Diese Windungen 36, 38 sind in einen Katalysator eingebettet, der auch Windungszwischenräume ausfüllt und einen Nach-Reaktor bildet. Die ersten Windungen 36 sind dabei z.B. in einen CO-Shiftkatalysator 37 eingebettet. Die folgenden Windungen 38 (Abschnitt C in Figur 3 und 5) sind im vorliegenden Ausführungsbeispiel in einen Methanisierungskatalysator 39 eingebettet. Die Katalysatoren 37, 39 können auf einem geeigneten Katalysatorkörper, wie beispielsweise einem Drahtgestrick oder dergleichen oder auch als lose Schüttung in den Zwischenraum zwischen den Windungen 36, 38 eingebracht sein oder direkt auf den Rippen eines Verdampfers, der als Rippenrohr ausgebildet ist.

Damit untergliedert sich der Verdampfer 24 in drei Abschnitte A, B, C, nämlich den Rohrschlangenabschnitt 33 zur wenigstens teilweisen Verdampfung des Wassers und Schockkühlung des Reformats sowie die durch die Windungen 36 und 38 gebildeten Abschnitte, in denen durch Wärmeaustausch mit den jeweiligen Katalysatoren 37, 39 die weitere, weitgehend restlose Verdampfung des Wassers bewirkt wird. Die Katalysatoren 37, 39 bilden den zweistufigen Nach-Reaktor.

Der Ausgang des Verdampfers ist über eine Steigrohr 41 an ein Druckreglerventil 42 angeschlossen, das den Druck in dem Verdampfer 24 unabhängig von dessen Durchströmung konstant hält. Der von dem Druckreglerventil 42 abgegebene Dampf wird dem Treibdüsenanschluss 43 einer Strahlpumpe 44 zugeleitet, deren Sauganschluss 45 an eine Brennstoffzuleitung angeschlossen ist. Ihr Ausgang speist die Zuführleitung 7 mit einem Gemisch aus Dampf und Brennstoff.

Der Speisewasseranschluss 28 wird von einer Speisewasserpumpe 46 mit Speisewasser versorgt. Diese ist von einer Steuereinrichtung 47 anhand der über einen Temperaturfühler 48 erfassten Temperatur des Katalysators 12 so gesteuert oder geregelt, dass die Temperatur des Katalysators 12 konstant gehalten wird. Da der Luftbedarf für den Brenner und die Brennstoffzelle proportional der Energiezufuhr PCH4 und damit der Speisewassermenge ist, kann der Stellgrad des Luftgebläses 49 in einfacher Weise dem Stellgrad der Speisewasserpumpe 46 nachgeführt werden, der vom Regler 47 vorgegeben wird.

Die Luft und das Brenngas werden über die Leitungen 21, 22 zugeführt. Als Brenngas kann Anodenrestgas einer Brennstoffzelle dienen.

Das Reformat wird einem Anoden-Eingang einer Brennstoffzelle 52 zugeführt. Entstehendes Anodenrestgas wird über eine Leitung 53 der Vorwärmeinrichtung 20 zugeführt. Das Gebläse 49 fördert Luft zu der Katode der Brennstoffzelle und zu der Vorwärmeinrichtung 20.

Der insoweit beschriebene Dampfreformer arbeitet wie folgt:

Es wird auf die Figuren 2 bis 4 verwiesen. Figur veranschaulicht hier mit einem ersten Kurvenast I die Temperatur der über die Leitungen 21, 22 zugeführten Gase, nämlich Luft und Brenngas. Der Kurvenast II veranschaulicht die Abgastemperatur des im Gegenstrom heraus geleiteten Abgases. Die dargestellten Temperaturen geben das Temperaturprofil in dem in Figur 4 veranschaulichten Dampfreformer 1, insbesondere in dessen Rekuperator, wieder. Der schleifenförmige Kurvenast III gibt in Figur 3 die Temperatur in der Brennkammer 15 bei Ablauf der flammenlosen Oxidation wieder. Wie veranschaulicht absolviert das Gas in der Brennkammer 15 mehrere Umläufe. Wie ersichtlich, kann bei einer Abgastemperatur von beispielsweise ca. 150°C eine Luft- und Gasvorwärmung bis auf etwa 800°C erreicht werden.

Die Kurve in Figur 2 gibt das Temperaturprofil des zu reformierenden und reformierten Gases wieder. Der Kurvenast IV kennzeichnet die Erwärmung des Speisewassers in dem Rohrschlangenabschnitt 29, der zugleich ein Speisewasservorwärmer und ein Wasserreformat-Gegenstromkühler ist. Mit einer Temperatur von etwas über 100°C wird nun das unter Druck stehende, vorgewärmte Speisewasser dem Verdampfer 24 zugeführt. Dies wird zunächst durch den unteren horizontalen Kurvenast V symbolisiert. Bei einem Punkt VI tritt das vorgewärmte Speisewasser in den Verdampfer ein. Es wird in dem Rohrschlangenabschnitt 33 auf Verdampfungstemperatur gebracht (Kurve VII) und durchläuft dann den gesamten Verdampfer 24, in dem es nach und nach verdampft. Dabei behält es seine Verdampfungstemperatur von z.B. 200°C bei, wie durch den horizontalen Kurvenast VIII veranschaulicht ist. Der Rohrverdampfer 24 stellt wie ein Wärmerohr eine einheitliche Temperatur für den Nach-Reaktor her. Es wird die Verdampfertemperatur $T_S$ nicht überschritten. Die Höhe der Verdampfertemperatur wird durch den Verdampferdruck an dem Druckregler 42 eingestellt.

Das Temperaturprofil gemäß Figur 2 wird auch bei Lastwechsel, insbesondere in der letzten Stufe in engen Grenzen eingehalten. So wird die Selektivität der Nachreaktion erhalten. Die Temperatureinstellung in der letzten Nachreaktorstufe wird hier nur durch die Druckregelung bewirkt.

Aus dem Verdampfer 24 gelangt der erzeugte Dampf zu der Strahlpumpe 44. Diese legt mit ihrem Verhältnis zwischen Treibdüsendurchmesser und Mischdüsendurchmesser das Dampf/Brennstoff-Verhältnis fest. Über ihren Sauganschluss 45 saugt die Strahlpumpe 44 die gewünschte Brennstoffmenge an und vermischt dieses mit dem Dampf. Dabei sinkt die Dampftemperatur (Figur 2, Kurvenast XI) zunächst etwas ab, wobei die Temperatur des beigemischten Brenngases sprunghaft ansteigt (Kurvenast X). Die Temperatur steigt dann bis zum Erreichen des Speiseanschlusses 8 allmählich an (Kurvenast XI). In dem Katalysator 12 nimmt die Temperatur gemäß Kurvenast XII weiter zu, bis sie die von dem Temperaturfühler 48 erfasste und durch Dosierung der Speisewasserzufuhr konstant ausgeregelte Temperatur $T_R$ erreicht. Mit dieser Temperatur verlässt das von dem Katalysator 12 erzeugte Reformat den Reaktor 9. Beim Auftreffen auf den ersten Abschnitt des Verdampfers 24 (Rohrschlangenabschnitt 33) wird das Reformat schockgekühlt (Figur 2, Kurvenast XIII), als Abschnitt A.

Danach trifft das gekühlte Reformat auf die Katalysatoren 37 und 39. Hier findet eine Nachreaktion zur CO-Umwandlung statt. Die präzise Temperaturführung verhindert eine zu starke Methanisierung, insbesondere der vorhandenen $CO_2$-Anteile.

Der insoweit beschriebene Dampfreformer 1 arbeitet eigenstabil. Erhöhte Abnahme elektrischer Leistung $P_{el}$ verschlechtert den Heizwert des Anodenrestgases. Sinkt somit die Temperatur an dem Temperaturfühler 48 erhöht die Regeleinrichtung die Speisewasserförderung und somit die Dampferzeugung und die Reformaterzeugung. Die sich einstellende Erhöhung des Anodenrestgasanfalls erhöht die Brennerleistung in der Brennkammer 15. Somit führt der Dampfreformer 1 eine automatische Lastanpassung durch.

Ein praktisch ausgeführter Dampfreformer 1 hat die folgenden Kennwerte erreicht:

$$\eta_R = \frac{100(VxHu)_{Wasserstoff}}{(VxHu)_{Prozessgas} + (VxHu)_{Heizgas}} \quad \text{in \%}$$

V [m³/h] - Volumenstrom im Normzustand
Hu [kWh/m³] - Heizwert

Wirkungsgrad der Umwandlung in Wasserstoff bei Beheizung des Reformers mit Anodenrestgas:

$$\eta_H = \frac{100(VxHu)_{Wasserstoff*}}{(VxHu)_{Prozessgas}} \quad \text{in \%}$$

* in der Brennstoffzelle umgesetzter Wasserstoff (typisch 75%).

Beispiel für den neuen Reformer:

- Außenabmessungen: L = 0,6 m; D = 0,3 m
- Prozessgas: 1 m³/h Erdgas mit Heizwert 10 kWh/m³
- Wasser: 2,5 kg/h mit 15 bar (= 3 m³/h Dampf, S/C = 3)
- Heizgas: 0,41 m³/h Erdgas mit Heizwert 10 kWh/m³
- Reformat: 4 m³/h $H_2$ mit einem Heizwert von 3 kWh/m³
- Wirkungsgrad $\eta_R$ = 85 %

Bei Beheizung mit Anodenrestgas:

(25 % des $H_2$ aus dem Reformat zzgl. des bei der Methanisierung gebildeten $CH_4$)

- verfügbarer Wasserstoff: 2,7 m³/h mit Heizwert 3 kWh/m³
- Wirkungsgrad $\eta_H$ = 81 %

Die beeinflussbaren Verluste des Reformers sind jeweils proportional $\Delta T_W$ ($\Delta T_W$ ist die Differenz der Wand- zur Umgebungstemperatur), $\Delta T_2$ und $\Delta T_R$ (siehe Figur 2). Außerdem hängen sie vom Dampfüberschuss im Reformat ab, der für die rußfreie Reformierung und die Shiftreaktion notwendig ist.

Der neue Kompaktdampfreformer 1 umfasst in einem einzigen Gerät die Dampfreformierung von Erdgas oder anderen Brennstoffen einschließlich CO-Nachreinigung. Die kontrollierte katalytische CO-Reinigung wird durch sorgfältige Temperaturkontrolle an dem Nachreaktor 37, 39, 39a erreicht. Die Temperaturkontrolle wird durch druckgeregelten Betrieb des Verdampfers 24 ermöglicht.

**Patentansprüche**

1. Kompakt-Dampfreformer (1)
   mit einem Brenner (16),
   mit einem Reaktor (9), der von dem Brenner (15) beheizt ist und der Erzeugung von Reformat aus Brennstoff und $H_2O$-Dampf dient,
   mit einer Vorwärmeinrichtung (20) zur Vorwärmung von zugeführter Luft und/oder von zugeführtem Brennstoff unter Rückgewinnung von Abgaswärme, die an den Brenner (16) angeschlossen ist und deren Wärmerückgewinnungsquotient ($\Delta T_1/\Delta T_2$) größer ist als 0,5,

mit einem Ringraum (10), der die Vorwärmeinrichtung (20) umgibt, von Reformat durchströmt und nach außen thermisch isoliert ist,

mit einem Rohrverdampfer (24), der zur Erzeugung von unter Druck stehendem $H_2O$-Dampf dient und der in dem Ringraum (10) angeordnet ist,

mit einem Nach-Reaktor (37, 39, 39a) zur weitgehenden Beseitigung von Kohlenmonoxidanteilen des erzeugten Reformats, der ebenfalls in dem Ringraum (10) angeordnet ist und mit dem Wasser durchströmten Rohrverdampfer (24) in thermischer Verbindung steht.

2. Kompakt-Dampfreformer nach Anspruch 1, **dadurch gekennzeichnet, dass** der Nach-Reaktor (37, 39, 39a) und der Rohrverdampfer (24) im Gleichstrom von Reformat und Wasser durchströmt sind.

3. Kompakt-Dampfreformer nach Anspruch 1, **dadurch gekennzeichnet, dass** an den Rohrverdampfer (24) eingangsseitig und an den Nach-Reaktor (37, 39, 39a) ausgangsseitig ein Wasser/Reformat-Gegenstromkühler (29) angeschlossen ist.

4. Kompakt-Dampfreformer nach Anspruch 1, **dadurch gekennzeichnet, dass** der Nach-Reaktor (37, 39, 39a) einen Shiftkatalysator (37) und/oder einen Methanisierungskatalysator (39) und/oder einen Nachoxidationskatalysator (39a) enthält.

5. Kompakt-Dampfreformer nach Anspruch 1, **dadurch gekennzeichnet, dass** der Rohrverdampfer (24) als druckfeste Rohrschlange ausgeführt ist, die Windungszwischenräume festlegt, in denen ein Katalysator (37, 39, 39a) zur Förderung der Nachreaktion angeordnet ist.

6. Kompakt-Dampfreformer nach Anspruch 1, **dadurch gekennzeichnet, dass** der Rohrverdampfer (24) als druckfestes Rippenrohr ausgebildet ist.

7. Kompakt-Dampfreformer nach Anspruch 1, **dadurch gekennzeichnet, dass** an den Rohrverdampfer (24) ausgangsseitig ein Druckregler (42) angeschlossen ist.

8. Kompakt-Dampfreformer nach Anspruch 7, **dadurch gekennzeichnet, dass** der Druckregler (42) auf einen solchen Druck eingestellt ist, dass die Verdampfungstemperatur des Wassers in dem Rohrverdampfer (24) auf einen Wert zwischen 130°C und 280°C festgelegt ist.

9. Kompakt-Dampfreformer nach Anspruch 1, **dadurch gekennzeichnet, dass** der Stoffstrom in dem Rohrverdampfer (24) in dem Bereich, der mit dem Nach-Reaktor (37, 39, 39a) in thermischer Verbindung steht, eine flüssige Phase enthält.

10. Kompakt-Dampfreformer nach Anspruch 1, **dadurch gekennzeichnet, dass** an den Rohrverdampfer (24) eine Strahlpumpe (44) angeschlossen ist, die der Beisaugung von Brennstoff und der Erzeugung eines $H_2O$-Dampf/Brennstoff-Gemischs zur Speisung des Reaktors (9) dient.

11. Kompakt-Dampfreformer nach Anspruch 10, **dadurch gekennzeichnet, dass** die Strahlpumpe (42) eine ungeregelte Strahlpumpe ist.

12. Kompakt-Dampfreformer nach Anspruch 1, **dadurch gekennzeichnet, dass** der Reaktor (9) mit einem Temperaturfühler (48) in Verbindung steht, der zur Beeinflussung der Speisewasserzufuhr zu dem Rohrverdampfer (24) in der Weise dient, dass bei sinkender Temperatur die Speisewasserförderung erhöht wird und umgekehrt.

13. Kompakt-Dampfreformer nach Anspruch 12, **dadurch gekennzeichnet, dass** der Temperaturfühler (48) ein Gebläse (49) zur Versorgung des Brenners (16) mit Verbrennungsluft steuert.

14. Kompakt-Dampfreformer nach Anspruch 1, **dadurch gekennzeichnet, dass** der Brenner (16) zumindest teilweise mit Anodenrestgas einer angeschlossenen Brennstoffzelle (52) gespeist ist.

**Claims**

1. Compact steam reformer (1)

with a burner (16)

with a reactor (9), which is heated by the burner (15) and serves to generate reformate from fuel and $H_2O$ vapour,

with a preheating device (20) for preheating supplied air and/or supplied fuel with the recovery of waste heat, which is connected to the burner (16) and the heat recovery quotient ($\Delta T_1/\Delta T_2$) of which is higher than 0.5,

with an annulus (10), which surrounds the preheating device (20), has reformate flowing through it and is thermally insulated to the outside,

with a tube evaporator (24), which serves to generate pressurised $H_2O$ vapour and is arranged in the annulus (10),

with a secondary reactor (37, 39, 39a) for substantially removing carbon monoxide contents of the generated reformate, which is also arranged in the annulus (10) and is thermally connected to the tube evaporator (24), through which water flows.

2. Compact steam reformer according to claim 1, **characterised in that** the secondary reactor (37, 39, 39a) and the tube evaporator (24) have reformate and water flowing through them in co-current flow.

3. Compact steam reformer according to claim 1, **characterised in that** a water/reformate reverse current cooler (29) is arranged on the tube evaporator (24) on the input side and on the secondary reactor (37, 39, 39a) on the output side.

4. Compact steam reformer according to claim 1, **characterised in that** the secondary reactor (37, 39, 39a) includes a shift catalyst (37) and/or a methanation catalyst (39) and/or a post-oxidation catalyst (39a).

5. Compact steam reformer according to claim 1, **characterised in that** the tube evaporator (24) is configured as a pressure-tight pipe coil, which defines coil interstices, in which a catalyst (37, 39, 39a) is arranged to promote the subsequent reaction.

6. Compact steam reformer according to claim 1, **characterised in that** the tube evaporator (24) is configured as a pressure-tight ribbed tube.

7. Compact steam reformer according to claim 1, **characterised in that** a pressure controller (42) is arranged on the tube evaporator (24) on the output side.

8. Compact steam reformer according to claim 7, **characterised in that** the pressure controller (42) is adjusted to a pressure such that the evaporation temperature of the water in the tube evaporator (24) is fixed at a value of between 130°C and 280°C.

9. Compact steam reformer according to claim 1, **characterised in that** the material flow in the tube evaporator (24) contains a liquid phase in the region connecting thermally to the secondary reactor (37, 39, 39a).

10. Compact steam reformer according to claim 1, **characterised in that** a jet pump (44), which serves to aspirate fuel and to generate a $H_2O$ vapour/fuel mixture to feed the reactor (9), is connected to the tube evaporator (24).

11. Compact steam reformer according to claim 10, **characterised in that** the jet pump (42) is an uncontrolled jet pump.

12. Compact steam reformer according to claim 1, **characterised in that** the reactor (9) connects to a temperature sensor (48), which serves to influence the feed water supply to the tube evaporator (24) in such a manner that when the temperature decreases, the feed water transport is increased and vice versa.

13. Compact steam reformer according to claim 12, **characterised in that** the temperature sensor (48) controls a fan (49) to supply the burner (16) with combustion air.

14. Compact steam reformer according to claim 1, **characterised in that** the burner (16) is at least partially supplied with anodic residual gas of a connected fuel cell (52).

**Revendications**

1. Reformeur à la vapeur compact (1) comprenant un brûleur (16), comprenant un réacteur (9) qui est chauffé par le brûleur (15) et qui sert à produire un reformat à partir d'un combustible et de vapeur de $H_2O$, comprenant un dispositif de préchauffage (20) qui est destiné à préchauffer l'air amené et/ou le combustible amené par récupération de la chaleur des gaz brûlés, qui est raccordé au brûleur (16) et dont le quotient de récupération de chaleur ($\Delta T_1/\Delta T_2$) est supérieur à 0,5, comprenant avec une chambre annulaire (10) qui entoure le dispositif de préchauffage (20), qui est traversée par un courant de reformat et qui est isolée thermiquement par rapport à l'extérieur, comprenant un évaporateur tubulaire (24) qui sert à produire de la vapeur de $H_2O$ sous pression et qui est disposé dans la chambre annulaire (10), comprenant un réacteur secondaire (37, 39, 39a) qui est destiné à éliminer en grande partie les fractions de monoxyde de carbone du reformat produit, qui est également disposé dans la chambre annulaire (10) et qui est en communication thermique avec l'évaporateur tubulaire (24) traversé par un courant d'eau.

2. Reformeur à la vapeur compact selon la revendication 1, **caractérisé en ce que** le réacteur secondaire (37, 39, 39a) et l'évaporateur tubulaire (24) sont traversés par un courant parallèle de reformat et d'eau.

3. Reformeur à la vapeur compact selon la revendication 1, **caractérisé en ce qu'**un refroidisseur à contre-courant d'eau/reformat (29) est raccordé à l'évaporateur tubulaire (24) côté entrée et au réacteur secondaire (37, 39, 39a) côté sortie.

4. Reformeur à la vapeur compact selon la revendication 1, **caractérisé en ce que** le réacteur secondaire (37, 39, 39a) contient un catalyseur de conversion (37) et/ou un catalyseur de méthanisation (39) et/ou un catalyseur d'oxydation secondaire (39a).

5. Reformeur à la vapeur compact selon la revendication 1, **caractérisé en ce que** l'évaporateur tubulaire (24) est réalisé sous la forme d'un serpentin résistant à la pression, qui définit des espaces inter-spires dans lesquels est disposé un catalyseur (37, 39, 39a) servant à favoriser la réaction secondaire.

6. Reformeur à la vapeur compact selon la revendication 1, **caractérisé en ce que** l'évaporateur tubulaire (24) est réalisé sous la forme d'un tube à ailettes résistant à la pression.

7. Reformeur à la vapeur compact selon la revendication 1, **caractérisé en ce qu'**un régulateur de pression (42) est raccordé à l'évaporateur tubulaire (24) côté sortie.

8. Reformeur à la vapeur compact selon la revendication 7, **caractérisé en ce que** le régulateur de pression (42) est réglé à une pression à laquelle la température d'évaporation de l'eau dans l'évaporateur tubulaire (24) est comprise entre 130 °C et 280 °C.

9. Reformeur à la vapeur compact selon la revendication 1, **caractérisé en ce que**, dans la zone en communication thermique avec le réacteur secondaire (37, 39, 39a), le courant de matière dans l'évaporateur tubulaire (24) contient une phase liquide.

10. Reformeur à la vapeur compact selon la revendication 1, **caractérisé en ce qu'**à l'évaporateur tubulaire (24) est raccordée une pompe à jet (44) qui sert à aspirer du combustible et à produire un mélange vapeur de $H_2O$/combustible pour alimenter le réacteur (9).

11. Reformeur à la vapeur compact selon la revendication 10, **caractérisé en ce que** la pompe à jet (42) est une pompe à jet non régulée.

12. Reformeur à la vapeur compact selon la revendication 1, **caractérisé en ce que** le réacteur (9) est relié à une sonde de température (48) qui sert à agir sur l'amenée d'eau d'alimentation à l'évaporateur tubulaire (24), de façon que l'amenée d'eau d'alimentation augmente quand la température diminue et inversement.

13. Reformeur à la vapeur compact selon la revendication 12, **caractérisé en ce que** la sonde de température (48) commande une soufflerie (49) servant à alimenter le brûleur (16) en air de combustion.

14. Reformeur à la vapeur compact selon la revendication 1, **caractérisé en ce que** le brûleur (16) est alimenté au moins partiellement en gaz anodique résiduel d'une pile à combustible (52) raccordée.

Fig. 1

Fig. 4

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10119083 A1
- WO 02085781 A
- EP 1031374 A2